# EUROPEAN PATENT SPECIFICATION

(11) **EP 0 442 602 B1**
(45) Date of publication and mention of the grant of the patent: **30.03.1994**
(21) Application number: 91300128.5
(22) Date of filing: 08.01.1991
(51) Int. Cl.: F16C 11/06

(54) **Ball joint**
Kugelgelenk
Joint à rotule

(30) Priority: 16.01.1990 JP 6667/90
(43) Date of publication of application: 21.08.1991
(73) Proprietor: KABUSHIKI KAISHA SOMIC ISHIKAWA, Sumida-ku Tokyo (JP)
(72) Inventor: Fukukawa, Takao, c/o Ishikawa Tekko K.K., Hamamatsu-shi, Shizuoka-ken (JP); Suzuki, Keiichiro, c/o Ishikawa Tekko K.K., Hamamatsu-shi, Shizuoka-ken (JP)
(74) Representative: Watkins, David

(56) References cited:
- EP-A- 0 348 642
- DE-A- 2 405 160
- FR-A- 2 250 042

## Description

The present invention relates to a slidable ball joint having a proper rigidity used at one end or both ends of a rod or an arm of a part of an automobile, such as its steering system or suspension system.

A ball joint generally consists of a socket, in which a ball seat is fitted, and a ball stud with its ball portion slidably fitted in the ball seat.

A ball joint used for a suspension system, such as the one mentioned above, is required to have smooth slidability, high rigidity and high load durability. Therefore, in most cases, hard plastics material is used for its ball seat. However, a ball seat made of hard plastics material presents a problem in that friction between the ball seat and the ball stud tends to fluctuate as a result of even slight discrepancies in the inner diameter of the socket. In other words, because an appropriate degree of friction, which is essential to obtain smooth operation of the ball joint, is not easily determined, it is necessary to make the inner diameter of the socket exact, and therefore the cost becomes high.

On the other hand, a ball joint described in J-P-A-50-045161 uses a ball seat with such a shape as to have a disk portion curved more steeply than the spherical surface of the ball portion in order to utilize the reaction force of the upward pushing of the disk portion as a preload for the ball portion at the time of assembly of the ball portion of the ball stud. The ball seat is placed prior to the assembly of the ball portion at the top of a spherical seat having slits, which is capable of containing the ball portion therein. This ball joint is provided with a space between the disk portion and a stopping member, which acts as a cover above the ball seat so that the disk portion is prevented from touching the cover and is thereby ensured to have a sufficient spread.

Although the ball joint described in the above patent publication applies preload from the disk portion to the ball portion, such a configuration of the disk portion alone is not sufficient to ensure enough elasticity to obtain stable friction. Moreover, as the spherical seat portion is provided with slits, the load bearing area is reduced accordingly, which is disadvantageous as compared with other ball joints with the same ball size and may present a necessity to use a ball joint one size larger.

EP-A-0,348,642 describes a ball joint having the features of the preamble of Claim 1.

As explained above, conventional ball joints present problems, such as the necessity to make the inner diameter of the socket highly accurate and the poor load durability.

The present invention has as its object the provision of a ball joint which has smooth slidability, high rigidity and high load durability and also allows, in spite of having a singular unit ball seat, its socket to have as much tolerance in size as in the case of a two-piece ball seat.

The invention provides a ball joint in accordance with Claim 1.

According to the present invention, the spherical seat portion formed when the ball seat is installed by being inserted, under pressure, between the spherical inner surface of the socket and the ball portion of the ball stud thereby minimizing the movement of the ball portion when load is applied to the ball portion. Further the ball portion is applied with a stable preload by the preload applying portion, which has sufficient elasticity because of the thin annular portion and the annular space.

According to a feature of the invention, a plurality of radial slits may be provided at the area from the preload applying portion to the thin annular portion of the ball seat. This feature makes it possible to stabilize the friction within a considerably narrow desired range, because the preload is made even more stable by means of the aforesaid slits.

The above, and other objects, features and advantages of the present invention will become apparent from the following description read in conjunction with the accompanying drawings, in which like reference numerals designate the same elements.
Figure 1 is a cross-sectional view of an embodiment of a ball joint according to the present invention;
Figure 2 is a cross-sectional view of the same in a partially assembled state;
Figure 3 is a cross-sectional view of the ball seat before assembly;
Figure 4 is a bottom view of the same;
Figure 5 is an oblique view from below of the same ball seat;
Figure 6 is an oblique view from above of the same;
Figure 7 is an enlarged cross-sectional view of the upper part of the ball seat; and,
Figure 8 is a graph for comparison of the tolerance of the inner diameter of the socket of a ball joint and that of a conventional ball joint.

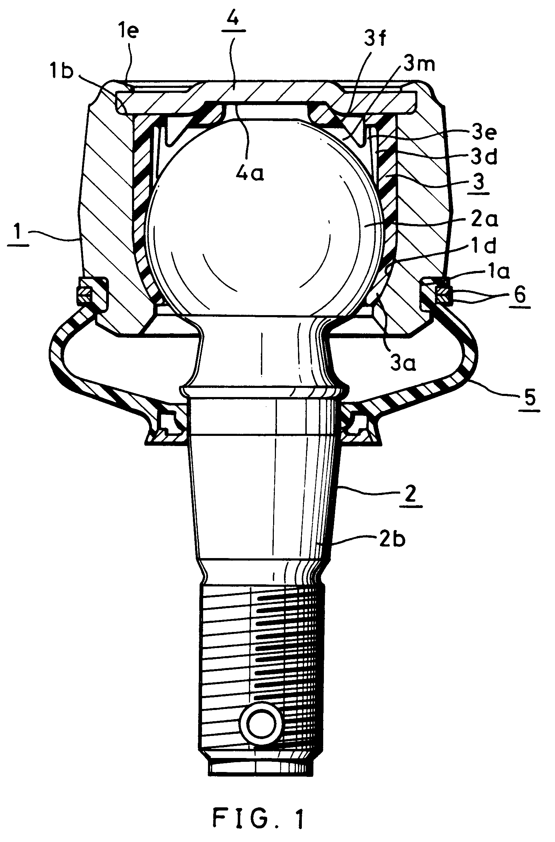

As shown in Fig. 1, the spherical seat portion 3a of a ball seat 3 is fitted between a socket 1 and the ball portion 2a of a ball stud 2. The top of the ball seat 3 is held by the bottom 4a of a plug 4 fixed to the top of the socket. A dust seal 5 is fitted to the area from the stud portion 2b of the ball stud 2 to a surrounding groove 1a at the lower part of the socket 1 and is fastened therein by a clip 6.

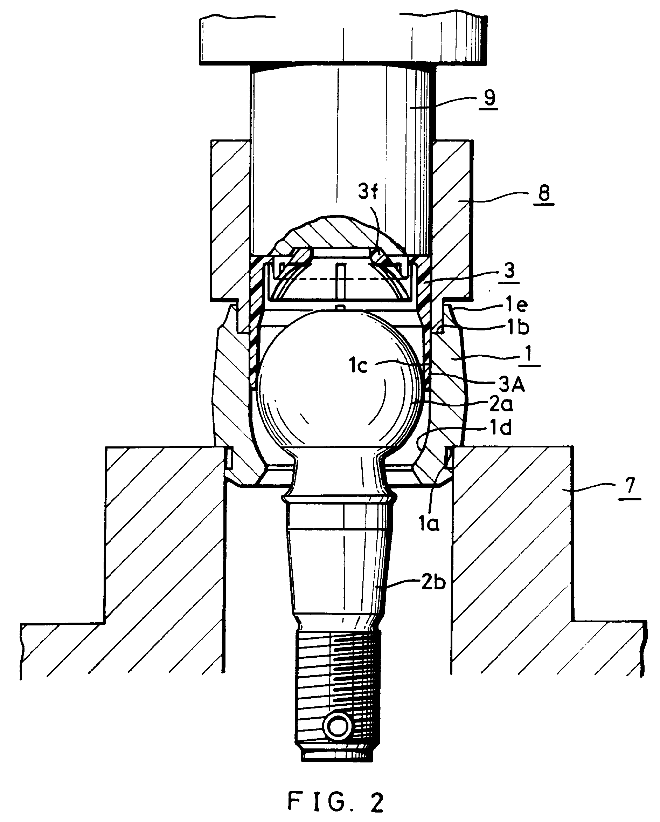

Next, the assembly procedure of the members described above is explained, with reference to Fig. 2. The groove 1a of the socket 1 is placed and thus engaged on a receiving base 7. A seat guide 8 is set against the shoulder portion 1b of the upper part of the socket 1, and then the ball seat 3 is inserted from the cylindrical inner side 1c to the part-spherical inner surface 1d with the force of a downward pressure of a pressure applying head 9 in such a manner that ball seat 3 slides on the inner surface of the seat guide 8. At that time, the lower cylindrical portion 3A of the ball seat 3 is so reshaped along the part-spherical inner surface 1d of the socket 1 as to wrap around the ball portion 2a of the ball stud 2, thereby forming the part-spherical seat portion 3a.

Then, the plug 4 is fixed by setting it against the shoulder portion 1b at the upper part of the socket and caulking the top end 1e of the socket 1 towards the center, so that the top of the socket 1 is sealed as shown in Fig. 1. As the final step, the dust seal 5 is fitted around the groove 1a in the socket 1 and fastened by the clip 6. Thus, the assembly is completed.

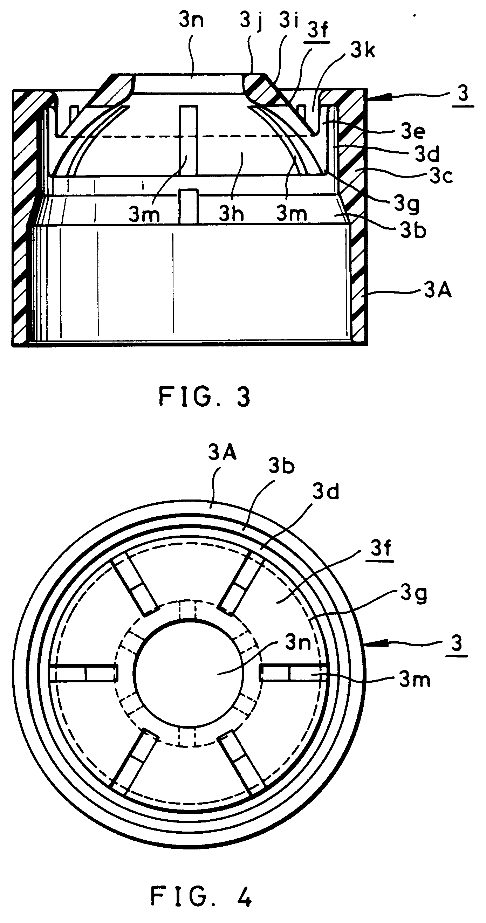

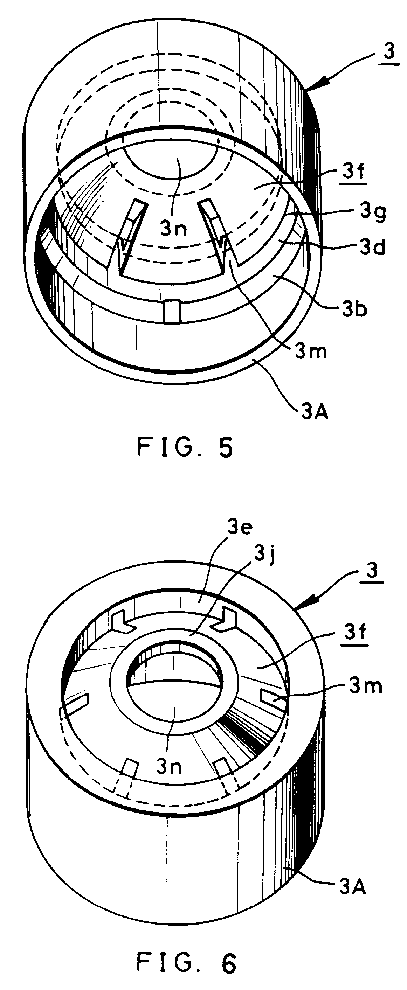

As shown in Figs. 3 through 7, the entire ball seat 3 is formed of a singular unit of hard plastics material. In other words, with the part-spherical portion 3b in between, the upper cylindrical portion 3c is formed with and located above the lower cylindrical portion 3A, which is to become the part-spherical seat portion 3a. A thin annular portion 3e is integrally formed with the upper cylindrical portion 3c in the manner that the top end of the upper cylindrical portion 3c is folded inwardly so as to have an annular space 3d between the upper cylindrical portion and the thin annular portion. A preload applying portion 3f is integrally formed with the inside of the thin annular portion 3e as its base.

The preload applying portion 3f is provided with a tongue 3g at the bottom thereof, a part-spherical portion 3h on its inner periphery, a part-conical portion 3i at its outer periphery, and a trapezoidal projecting portion 3j at its top. Further, a V-shaped groove 3k is formed between the preload applying portion 3f and the thin annular portion 3e, and a plurality of slits 3m are formed radially in the area from the preload applying portion 3f to the thin annular portion 3e.

The ball seat 3 is made of a hard plastics material with a low sliding resistance and a high load durability, such as, for example, polyacetal, and acts upon the ball portion 2a of the ball stud 2 in the following manner.

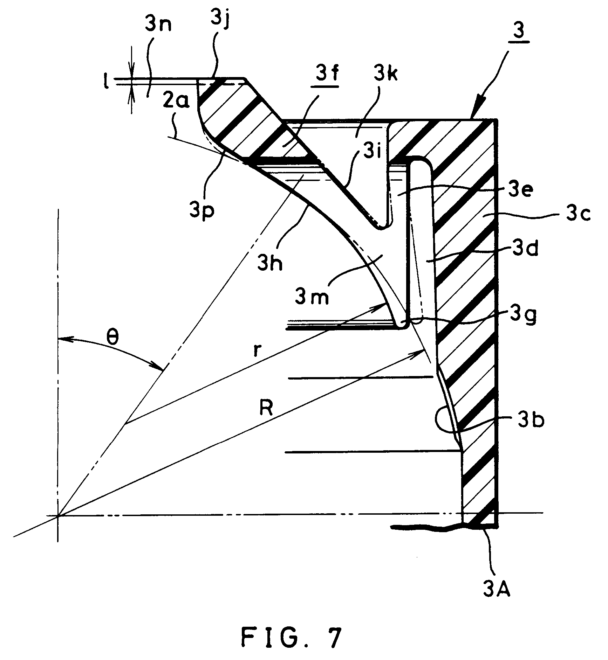

As shown in Fig. 7, when the trapezoidal projecting portion 3j at the uppermost part of the ball seat 3 is pushed downwardly by a distance 1 by means of the pressure of the bottom 4a of the plug 4, the preload applying portion 3f applies a preload to the ball portion 2a of the ball stud 2, whilst being deformed so as to fill the upper space 3p between the upper part of the part-spherical portion 3h and the ball portion 2a. Furthermore, the tongue 3g of the ball seat 3 lies on an arc whose radius of curvature r is somewhat less than the radius R of the ball portion 2a of the ball stud 2, with the center of the arc being on a line extending at angle ϑ shown in Fig. 7 to the axis of the joint. The tongue 3g is thereby stretched by the ball portion 2a at the time of assembly. As a result, the tongue 3g produces a reaction force and thereby applies a preload from diagonally above the ball portion 2a towards the center of the sphere.

In order to stabilize the above preload, the area from the preload applying portion 3f to the thin annular portion 3e of ball seat 3 is provided with a plurality of radial slits 3m. When the trapezoidal projecting portion 3j of the ball seat 3, to which pressure is applied by the bottom 4a of the plug 4, is pushed downwardly and thus applies a preload to the ball portion 2a, the preload applying portion 3f of the ball seat 3 is stretched in the direction of the outer surface. However, because of the plurality of slits 3m and the thin annular portion 3e, excessive stress is not applied.

Furthermore, although the tongue 3g of the ball seat 3 is pushed to spread in the diagonally upward direction by the ball portion 2a of the ball stud 2, excessive stress is not experienced because it deforms into the annular space 3d.

Represented in Fig. 7 by a line of alternate long and two short dashes, is the shape of the ball seat at the time of assembly. As the actions of the parts described above produce a preload the value of which is easy to determine, an appropriate preload can be usefully obtained.

In order to maintain the preload obtained by the above actions for a long period of time, the ball portion 2a is enveloped between the part-spherical portion 3b of the ball seat 3 and the part-spherical seat portion 3a, which has been re-shaped along the part-spherical inner surface 1d at the lower part of the socket at the time of assembly. Therefore, movement of ball portion 2a is minimized even when an external force is applied, and thus, any affect on the upper part of the ball seat is reduced.

As explained above, although the ball seat 3 is formed as a singular unit, its upper part and lower part have different functions; the upper part being for applying a preload, and the lower part being for load bearing.

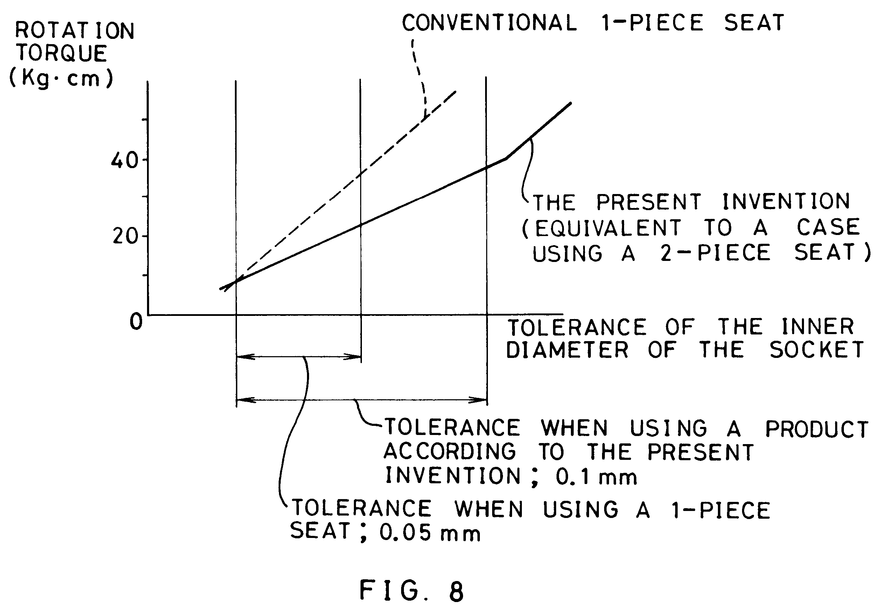

Fig. 8 is a graph for comparison of the relation between the friction and the tolerance of the socket diameter of a ball joint using a ball seat 3 according to the above-described embodiment with that of a ball joint using a conventional one-piece ball seat. The graph shows that friction (rotation torque) in relation to the tolerance of the inner diameter of the socket of a product of the present invention is smaller, about half, as compared with the conventional product, and therefore is much more stable.

Further, if it is not necessary to set the degree of friction so precisely, the slits 3m may be omitted.

According to the present invention, the preload applying portion of the ball seat for applying preload to the ball portion and the part-spherical portion of the ball seat, which is re-shaped along the part-spherical inner surface of the socket at the time of assembly into a form capable of enveloping the ball portion, are integrally formed from one piece of hard plastics material. Therefore, the ball seat has, in spite of being a singular unit made of hard plastics material, an excellent friction applying function as well as good load durability of the part-spherical seat portion, which is so re-shaped at the time of assembly as to envelop the ball portion. Thus, it is possible to maintain high rigidity (high load durability) and smooth sliding ability for a long period of time. As the base of the preload applying portion is provided with a thin annular portion and an annular space for facilitating its shape changing when applying preload to the ball portion in order to stabilize the preload, thereby ensuring sufficient elasticity, friction can be easily set at an appropriate degree without making the inner diameter of the socket as accurate as a conventional singular-unit ball seat would require. As a result, the precision of the inner diameter of the socket may be reduced to the level of tolerance of a two-unit ball seat, and the production cost may also be reduced.

By providing a plurality of radial slits at the area from the preload applying portion to the thin annular portion of the ball seat 3, thereby further increasing the elasticity of the preload applying portion, the setting of the amount of friction is made even easier, which characteristic is very advantageous in cases where the range of tolerance of the friction is required to be set precisely.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A ball joint comprising: a ball seat (3) formed as a singular unit, an upper cylindrical portion (3c) of which is formed with and located above a lower cylindrical portion (3A) both made of hard plastics material and fitted in a socket (1); and a ball stud (2), the ball portion (2a) of which is slidably fitted inside said ball seat (3); wherein:
a thin annular portion (3e) is formed integrally with the upper cylindrical portion (3c) of the ball seat (3) with an annular space (3d) between the inner wall of the upper cylindrical portion (3c) and the thin annular portion (3e);
a preload applying portion (3f) of said ball seat (3) and a part-spherical seat portion (3a) of the ball seat (3) are formed into a singular unit, said preload applying portion (3f) being formed, with the inside of said thin annular portion (3e) as its base, near the upper end of the upper cylindrical portion (3c) of the ball seat (3) in order to apply preload to the ball portion, and said part-spherical seat portion (3a) being located near the connecting part of the ball portion (2a) to the stud portion (2b) of the ball stud (2) and being formed into such a shape as to envelop the ball portion (2a) by means of re-shaping a part (3A) of the lower cylindrical portion of the ball seat (3) along a part-spherical inner surface (ld) of the socket (1) at the time of assembly, characterized in that said thin annular portion (3e) is formed by bending inwards the upper end of said cylindrical portion (3c) of ball seat (3).

2. A ball joint according to Claim 1 wherein a plurality of radial slits (3m) are provided at the area from the preload applying portion (3f) to the thin annular portion (3e) of the ball seat (3).

## Patentansprüche

1. Kugelgelenk mit:
einem Kugelsitz (3), der als eine einteilige Einheit gebildet ist, dessen oberer zylindrischer Abschnitt (3c) mit einem unteren zylindrischen Abschnitt (3A) ausgebildet ist und oberhalb davon gelegen ist, die beide aus Hartplastikwerkstoff bestehen und in eine Buchse (1) eingepaßt sind; und
einem Kugelbolzen (2), dessen Kugelabschnitt (2a) gleitfähig innerhalb des Kugelsitzes (3) eingepaßt ist; wobei:
ein dünner ringförmiger Abschnitt (3e) mit dem oberen zylindrischen Abschnitt (3c) des Kugelsitzes (3) einstückig ausgebildet ist und einen ringförmigen Raum (3d) zwischen der inneren Wand des oberen zylindrischen Abschnittes (3c) und dem dünnen ringförmigen Abschnitt (3e) ausbildet; wobei
ein Vorlastaufbringungs-Abschnitt (3f) des Kugelsitzes (3) und ein teilsphärischer Sitzabschnitt des Kugelsitzes (3) in eine einteilige Einheit geformt sind und der Vorlastaufbringungs-Abschnitt (3f) mit der Innenseite des dünnen ringförmigen Abschnittes (3e) als seiner Grundfläche nahe dem oberen Ende des oberen zylindrischen Abschnittes (3c) des Kugelsitzes (3) ausgebildet ist, um die Vorlast auf den Kugelabschnitt aufzubringen, und wobei sich der teilsphärische Sitzabschnitt (3a) nahe dem Verbindungsteil des Kugelabschnittes (2a) zu dem Bolzenabschnitt (2b) des Kugelbolzens (2) befindet und in einer solchen Form ausgebildet ist, daß der Kugelabschnitt (2a) durch Umformen eines Teils (3A) des unteren zylindrischen Abschnittes des Kugelsitzes (3) entlang einer teilsphärischen Innenfläche (1d) der Buchse (1) zum Zeitpunkt der Montage umhüllt wird, **dadurch gekennzeichnet**, **daß** der dünne ringförmige Abschnitt (3e) durch nach innen gerichtetes Krümmen des oberen Endes des zylindrischen Abschnittes (3c) des Kugelsitzes (3) gebildet ist.

2. Kugelgelenk gemäß Anspruch 1, **dadurch gekennzeichnet**, **daß** eine Vielzahl von Radialschlitzen (3m) im Gebiet von dem Vorlastaufbringungs-Abschnitt (3f) bis zu dem dünnen ringförmigen Abschnitt (3e) des Kugelsitzes (3) geschaffen ist.

## Revendications

1. Joint à rotule sphérique comprenant: un siège de rotule (3) constituant une unité unique, dont une partie cylindrique supérieure (3c) est formée avec et située au-dessus d'une partie cylindrique inférieure (3A), les deux étant réalisées en matière plastique dure et ajustées dans une douille (1); et une tige à rotule (2), dont la partie formant rotule (2a) est ajustée pour glisser à l'intérieur dudit siège de rotule (3); dans lequel
une mince partie annulaire (3e) est formée d'une pièce avec la partie cylindrique supérieure (3c) du siège de rotule (3) avec un espace annulaire (3d) entre la paroi intérieure de la partie cylindrique supérieure (3c) et la mince partie annulaire (3e);
une partie d'application d'une précharge (3f) dudit siège de rotule (3) et une partie de siège partiellement sphérique (3a) du siège de rotule (3) constituent une unité unique, ladite partie d'application d'une précharge (3f) étant formée, avec la face intérieure de ladite mince partie annulaire (3e) comme base, près de l'extrémité supérieure de la partie cylindrique supérieure (3c) du siège de rotule (3) afin d'appliquer une précharge à la partie formant rotule, et ladite partie de siège partiellement sphérique (3a) étant- située près de la partie de raccordement de la partie formant rotule (2a) à la partie formant tige (2b) de la tige à rotule (2) et étant dotée d'une forme propre à envelopper la partie formant rotule (2a) au moyen du réprofilage d'une partie (3A) de la partie cylindrique inférieure du siège de rotule (3) le long d'une surface intérieure partiellement sphérique (1d) de la douille (1) au moment de l'assemblage, caractérisé en ce que ladite mince partie annulaire (3e) est formée en pliant vers l'intérieur l'extrémité supérieure de ladite partie cylindrique (3c) du siège de rotule (3).

2. Joint à rotule sphérique suivant la revendication 1, dans lequel il est prévu une pluralité de fentes radiales (3m) dans la zone s'étendant de la partie d'application d'une précharge (3f) jusqu'à la mince partie annulaire (3e) du siège de rotule (3).
